# EUROPÄISCHE PATENTSCHRIFT

(11) **EP 0 689 219 B1**
(45) Veröffentlichungstag und Bekanntmachung des Hinweises auf die Patenterteilung: **05.11.1997**
(21) Anmeldenummer: 95114374.2
(22) Anmeldetag: 03.12.1992
(51) Int. Cl.: H01H 35/14, B60R 21/32, B60R 22/46

(54) **Fahrzeugsensitiver mechanischer Kontaktgeber**
Vehicle sensitive mechanical contactor
Contacteur mécanique sensible aux mouvements d'un véhicule

(30) Priorität: 10.12.1991 DE 4140691
(43) Veröffentlichungstag der Anmeldung: 27.12.1995
(62) Teilanmeldung aus: 92120657.9
(73) Patentinhaber: TRW Occupant Restraint Systems GmbH, 73553 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- GB-A- 2 236 619
- GB-A- 2 236 857
- US-A- 3 655 928
- US-A- 4 001 185

## Beschreibung

Die Erfindung betrifft einen fahrzeugsensitiven mechanischen Kontaktgeber zur Auslösung eines Rückhaltesystems in Fahrzeugen, mit einem zur fahrzeugfesten Anbringung bestimmten Gehäuse und einem darin beweglich aufgenommenen Massekörper, der mit einem elektrischen Kontaktpaar zusammenwirkt, entsprechend dem Oberbegriff des Anspruchs 1 (GB-A-2 236 619).

Zur Auslösung von Rückhaltesystemen in Fahrzeugen, beispielsweise Gurtstraffern in einem Sicherheitsgurtsytem oder Gassack-Aufprallschutzsystemen, wird gewöhnlich ein zentraler fahrzeugsensitiver Sensor verwendet, dessen elektrisches Ausgangssignal in einer elektronischen Steuereinheit zu einem Auslösesignal verarbeitet wird. Dieses Auslösesignal wird einem elektrischen Zünder an einem pyrotechnischen Gasgenerator des Rückhaltesystems zugeführt. Der Aufwand für die elektronische Steuereinheit ist beträchtlich. Sie hat einen hohen Anteil an den Gesamtkosten des Rückhaltesystems.

Es wurden auch bereits mechanische Kontaktgeber mit einem beweglich in einem Gehäuse gelagerten Massekörper vorgeschlagen, der auf die Fahrzeugverzögerung ansprechend einen elektrischen Kontakt mit einem feststehend im Gehäuse angebrachten Kontaktelement herstellt. Diese mechanischen Kontaktgeber können mit geringem Aufwand verwirklicht werden, konnten sich jedoch bisher nicht durchsetzen, weil die Kontaktgabe nicht ausreichend zuverlässig erfolgte.

Der Erfindung liegt die Aufgabe zugrunde, einen fahrzeugsensitiven mechanischen Kontaktgeber zur Verfügung zu stellen, der sich durch besonders einfache Ausbildung und sichere Kontaktgabe auszeichnet.

Diese Aufgabe wird durch die im Patentanspruch 1 angegebene Ausgestaltung des Kontaktgebers gelöst. Vorzugsweise sind beide Kontaktelemente des Kontaktgebers jeweils als Kontaktfeder ausgebildet, die am Gehäuse befestigt ist. Durch die erste Kontaktfeder wird der Massekörper federnd in seiner Ruhestellung gehalten. Erst wenn die Fahrzeugverzögerung einen vorbestimmten Schwellwert überschritten hat, wird die Vorspannkraft der Kontaktfeder überwunden, so daß die Massekugel in Bewegung versetzt wird. Durch die Massekugel wird dann die Kontaktfeder ausgelenkt und in Richtung des am Gehäuse befestigten Kontaktes umgebogen. Das Kontaktpaar ist durch die Kontaktfeder und den am Gehäuse befestigten Kontakt gebildet; die Massekugel hat keine elektrische Funktion. Vorzugsweise ist auch der am Gehäuse befestigte Kontakt als Kontaktfeder ausgebildet. Die beiden Kontaktfedern sind im Bereich ihrer Berührungsflächen mit üblichem Kontaktmaterial beschichtet, das hohen Anforderungen an Korrosionsbeständigkeit und geringem Übergangswiderstand genügt. Im Ruhezustand haben die Kontaktfedern einen vorbestimmten Abstand voneinander, der sehr klein sein kann, wodurch eine kleine Bewegungsstrecke des Massekörpers und infolgedessen eine kurze Ansprechzeit gewährleistet ist. Da überdies der Massekörper nur eine Masse von beispielsweise 25 bis 35 g benötigt, kann der mechanische Kontaktgeber äußerst kompakt und mit geringem Gewicht ausgeführt werden.

Gemäß der Erfindung sind Maßnahmen vorgesehen, um ein Kontaktprellen zu verhindern. Als erste Maßnahme ist vorgesehen, daß die am Gehäuse befestigte, zweite Kontaktfeder an ihrem freien Ende von der benachbarten Innenwand des Gehäuses einen vorbestimmten Abstand von etwa 1 bis 2 mm aufweist und durch den Massekörper über die dazwischen angeordnete erste Kontaktfeder in Richtung gegen die Innenwand des Gehäuses auslenkbar ist. Wenn der vorzugsweise als Kugel ausgebildete Massekörper in Bewegung kommt und die erste Kontaktfeder gegen die zweite stößt, kann diese federnd nachgeben, so daß der Stoß bedämpft wird. Auf diese Weise wird nicht nur ein Abprellen der Kontaktfedern voneinander vermieden, sondern es wird auch die Dauer der Kontaktgabe vergrößert. Der erfindungsgemäße mechanische Kontaktgeber gibt daher einen sauberen Auslöseimpuls von ausreichender Dauer ab.

Als zweite Maßnahme zur Bekämpfung des Kontaktprellens ist vorgesehen, daß mit der Oberfläche des Massekörpers eine unter vorbestimmter Vorspannung stehende Federeinrichtung, vorzugsweise eine Federlamelle, in Reibungseingriff steht. Die Bewegung der Kugel in Richtung der am Gehäuse befestigten Kontaktfeder wird durch Reibung bedämpft, so daß die Güte des mechanischen Resonanzsystems, welches durch die Kontaktfedern und den Massekörper gegeben ist, vermindert wird. Die Federlamelle wird vorzugsweise über der Oberseite des Massekörpers angeordnet, so daß sie auch dessen Vertikalbewegungen verhindert oder zumindest stark bedämpft.

Der erfindungsgemäße Kontaktgeber eignet sich aufgrund seiner kompakten Ausbildung ausgezeichnet dazu, unmittelbar auf den Mantel eines Gasgenerators am Rückhaltesystem, beispielsweise einem pyrotechnischen Gurtstraffer, aufgesteckt zu werden. Das Rückhaltesystem kann dann als komplette Baugruppe ausgebildet werden.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen senkrechten Längsschnitt der in Fig. 4 in Perspektive gezeigten Ausführungsform des mechanischen Kontaktgebers;
- Fig. 2: einen senkrechten Querschnitt des Kontaktgebers nach Fig. 4;
- Fig. 3: einen waagerechten Schnitt des Kontaktgebers nach Fig. 4;
- Fig. 4: eine Perspektivansicht einer ersten Ausführungsform des mechanischen Kontaktgebers;
- Fig. 5: eine Schnittansicht einer Weiterbildung der in den Fig. 1 bis 4 gezeigten Ausführungsform des Kontaktgebers mit einem Teil eines Sicherheitsgurt-Rückhaltesystems;
- Fig. 6: einen Schnitt quer zur Schnittebene in Fig. 5;
- Fig. 7: einen Teilschnitt entlang einer Ebene senkrecht zur Schnittebene in Fig. 5; und
- Fig. 8: eine Perspektivansicht der in den Fig. 5 bis 7 gezeigten Ausführungsform des Kontaktgebers.

Im Innenraum eines allgemein quaderförmigen Gehäuses 10 aus Kunststoffmaterial ist als fahrzeugsensitiver Massekörper eine Massekugel 12 beweglich aufgenommen. Die Massekugel 12 ruht auf einer prismaförmigen Bodenwandung des Gehäuses 10. Dieses besteht aus einem Bodenteil 10a und einem Deckelteil 10b. Es ist mit seitlichen angeformten Montageflanschen 10c versehen. Bodenteil 10a und Deckelteil 10b sind miteinander verklebt oder verschweißt. Im Bodenteil 10a des Gehäuses 10 sind zwei Kontaktfedern 14, 16 befestigt. Die Kontaktfedern 14, 16 sind rechtwinklig abgebogen und aus dem Bodenteil 10a des Gehäuses herausgeführt. Ihre aus dem Gehäuse herausgeführten freien Enden bilden Anschlußteile für eine komplementäre Steckvorrichtung. Die äußeren Anschlußteile der Kontaktfedern 14, 16 sind von einem angeformten Stecksockel 10d des Gehäuses 10 umgeben.

Eine im Bodenteil 10a des Gehäuses 10 verankerte, rechtwinklig abgebogene Federlamelle 18 liegt unter vorbestimmter Vorspannung an der Oberseite der Massekugel 12 auf und steht mit dieser in Reibungseingriff. Auch die erste Federlamelle 14 ist unter einer vorbestimmten Vorspannung an der Oberfläche der Massekugel 12 in Anlage und drückt diese gegen das in das Innere des Gehäuses hineinragende Ende einer Justierschraube 20, die in eine Gewindebohrung des Bodenteils 10a des Gehäuses eingeschraubt ist.

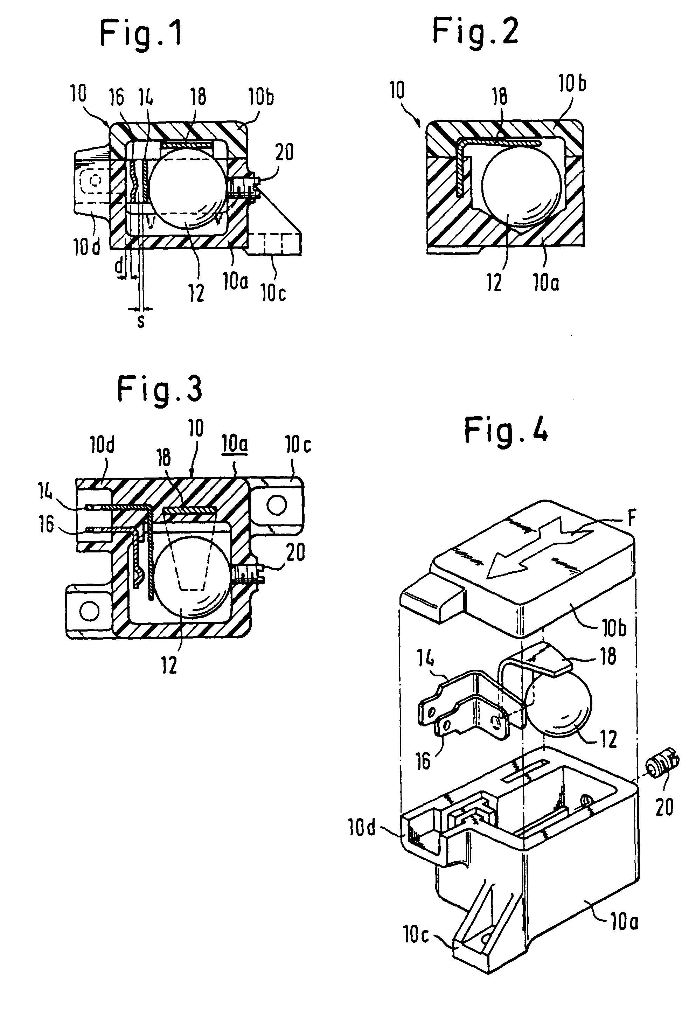

Die Kontaktfedern 14, 16 haben einen vorbestimmten Abstand s voneinander (Fig. 1). Ferner hat die Kontaktfeder 16 einen vorbestimmten Abstand d von der ihr benachbarten Innenwandung des Gehäuses. Der Kontaktgeber wird im Fahrzeug in einer Richtung eingebaut, die durch einen auf dem Deckelteil 10b des Gehäuses gut sichtbar angebrachten Pfeil F (Fig. 4) angegeben ist. Unter der Wirkung einer Fahrzeugverzögerung ist die Massekugel 12 bestrebt, die Kontaktfeder 14 in Richtung zu der Kontaktfeder 16 auszulenken. Sie setzt sich aber erst in Bewegung, wenn ihre Trägheitskraft die Vorspannkraft der Kontaktfeder 14 überwindet. Zusätzlich wird die Bewegung der Massekugel 12 durch die Reibung an der Federlamelle 18 behindert. Die Summe aus Vorspannkraft der Kontaktfeder 14 und Reibungskraft zwischen Federlamelle 18 und der Oberfläche der Massekugel 12 ist so gewählt, daß diese sich bei einem vorbestimmten Wert der Fahrzeugverzögerung in Bewegung setzt. Mittels der Justierschraube 20 kann dieser Wert eingestellt werden. Nach erfolgter Einstellung wird die Justierschraube 20 vorzugsweise mit Lack versiegelt.

Bei einer vereinfachten Ausführungsform wird auf die Justierschraube 20 verzichtet.

Wenn der vorbestimmte Verzögerungswert überschritten wird, setzt sich die Massekugel 12 in Bewegung und wird unter Auslenkung der Kontaktfeder 14 beschleunigt. Da der Abstand s zwischen den Kontaktfedern 14, 16 sehr klein sein kann, beispielsweise 1 oder 2 mm, gelangen die Kontaktfedern 14, 16 bereits nach einer sehr kurzen Zeitspanne, die nach der bekannten Gesetzmäßigkeit s = ½ Δa t² berechnet wird, miteinander in Berührung. Bei ausreichender Verzögerung wird nun auch die Kontaktfeder 16 ausgelenkt, die so den von der Massekugel 12 ausgeübten Stoß bedämpft. Die Auslenkung der zweiten Kontaktfeder 16 verhindert nicht nur ein Zurückprellen der Kontaktfeder 14, sondern hat auch eine Verlängerung der Zeitspanne zur Folge, während welcher eine sichere Kontaktgabe erfolgt. Durch die von der Federlamelle 18 verursachte Reibung wird das aus den Kontaktfedern 14, 16 und der Massekugel 12 bestehende Resonanzsystem stark bedämpft, so daß jegliche Schwingneigung unterdrückt wird. Die Federlamelle 18 verhindert darüber hinaus unerwünschte Vertikalbewegungen der Massekugel 12.

Es wurde gefunden, daß die durch die Auslenkung der zweiten Kontaktfeder 16 bewirkte Bedämpfung des von der Massekugel 12 ausgeübten Stoßes jegliches Kontaktprellen verhindert, so daß ein sauberer Auslöseimpuls von ausreichender Dauer erzeugt werden kann. Fehlauslösungen werden durch die Vorspannung der Kontaktfeder 14 und die Bedämpfung mittels der Federlamelle 18 sicher vermieden. Schließlich können die Kontaktfedern 14, 16 als Kontaktfederlamellen aus bewährten Werkstoffen hergestellt und zusätzlich im Kontaktbereich mit hochwertigen Kontaktwerkstoffen beschichtet werden, die korrosionsbeständig sind und einen niedrigen Übergangswiderstand gewährleisten. Der Kontaktgeber arbeitet daher sehr zuverlässig.

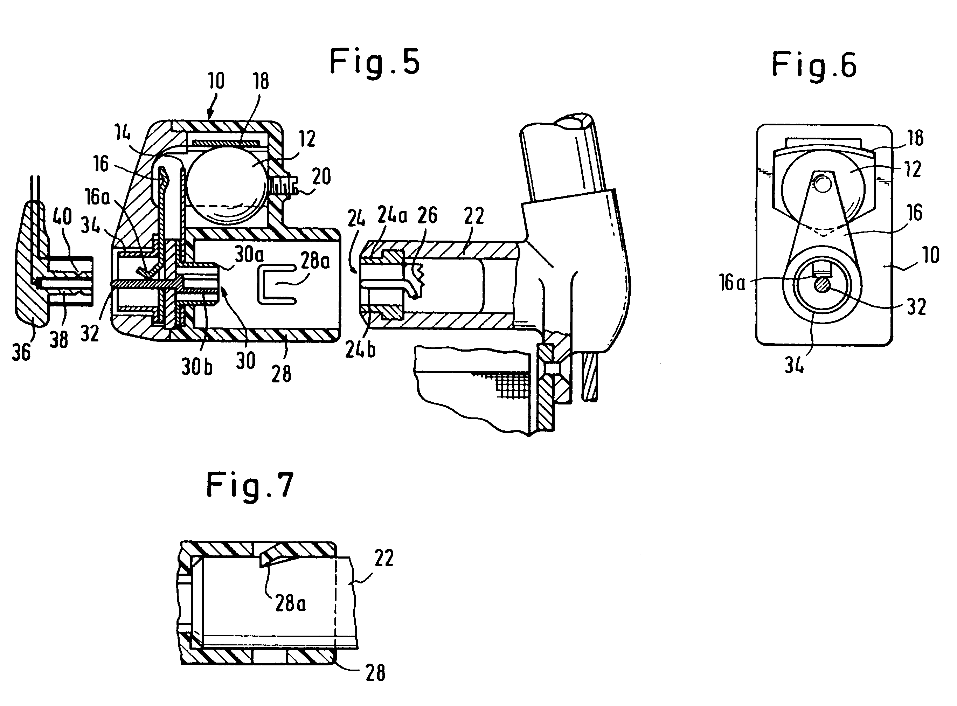

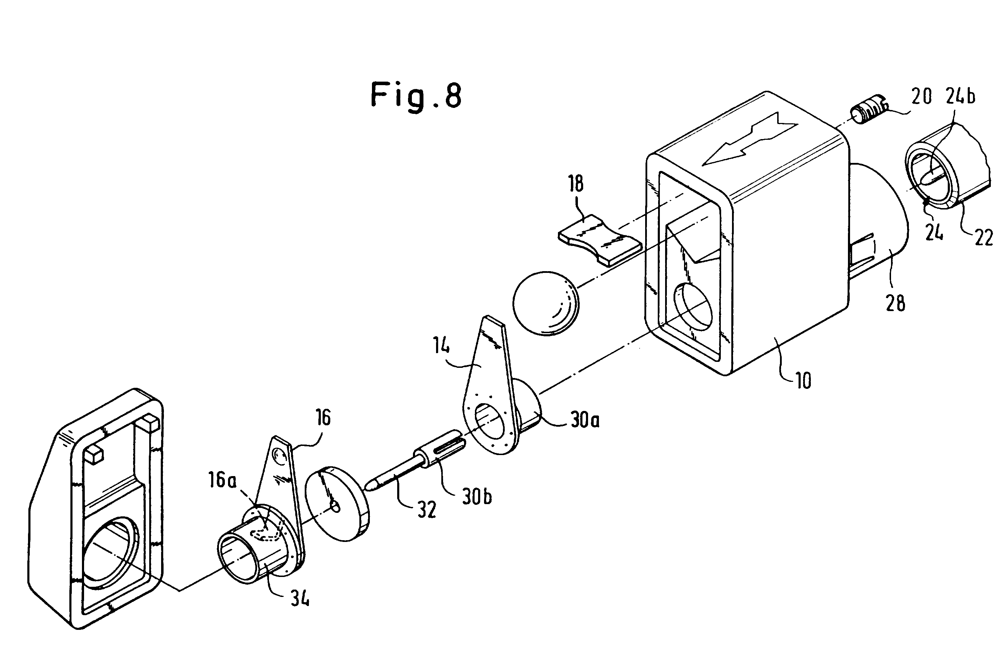

Für die Massekugel 12 ist eine geringe Masse von beispielsweise 25 bis 35 g ausreichend. In Verbindung mit dem kurzen Bewegungsweg der Massekugel 12 von beispielsweise nur 1 bis 2 mm bis zur Kontaktgabe ergibt sich eine überaus kompakte Bauform des Kontaktgebers. Bei der in den Fig. 5 bis 8 gezeigten Ausführungsform wird dieser Umstand ausgenutzt, indem der Kontaktgeber mit einem Rückhaltesystem, insbesondere einem pyrotechnischen Gurtstraffer, zu einer kompakten Baugruppe vereinigt wird.

Die in den Fig. 5 bis 8 gezeigte Ausführungsform des Kontaktgebers ist dazu bestimmt, auf den zylindrischen Mantel eines pyrotechnischen Gasgenerators 22 an einen Gurtaufroller mit Gurtstraffer aufgesteckt zu werden. Gurtaufroller und Gurtstraffer sind in Fig. 5 nur angedeutet, da sie ansonsten herkömmlich ausgebildet sind. Der pyrotechnische Gasgenerator 22 ist an seinem freien Ende mit Steckkupplungselementen 24 für einen elektrischen Zünder 26 versehen. Der mechanische Kontaktgeber ist hinsichtlich aller Funktionsteile gleich ausgebildet wie bei der Ausführungsform nach den Fig. 1 bis 4 und wird daher nicht nochmals beschrieben. An dem Gehäuse 10 ist bei dieser Ausführungsform eine Buchse 28 angeformt, die auf den Mantel des Gasgenerators 22 aufschiebbar ist. Mittels einer in der Seitenwandung der Buchse 28 federnd angeformten Nase 28a, die in eine Aussparung in der Mantelfläche des Gasgenerators 22 eingreift, wird die aufgeschobene Buchse 28 gesichert. An ihrer Bodenwandung ist die Buchse 28 mit in ihren Innenraum hineinragenden Steckkupplungselementen 30 versehen, die komplementär zu den Steckkupplungselementen 24 des Gasgenerators 22 sind. Diese Steckkupplungselemente 24, 30 bilden eine Koaxial-Steckverbindung. Der radial äußere Anschluß 30a der kupplungselemente 30 umgibt den radial inneren, axialen Anschluß schluß 30b, der als Steckbuchse ausgebildet ist. In den 30b ist ein entsprechender axialer Anschlußstift 24b der Steckkupplungselemente 24 einsteckbar. Der Anschluß 30a ist in den radial äußeren Buchsenteil 24a der Steckkupplungselemente 24 einschiebbar.

Die erste Kontaktfeder 14 ist mit dem radial äußeren Anschluß 30a der Steckkupplungselemente 30 verbunden. Die zweite Kontaktfeder 16 endet an ihrem aus dem Innenraum des Gehäuses 10 herausgeführten Teil als umgebogene Kontaktlamelle 16a. Diese Kontaktlamelle 16a steht in federndem Eingriff mit der Mantelfläche eines Kontaktteils 32 in Form eines axialen Anschlußstiftes, der einstückig und koaxial mit dem Anschluß 30b verbunden ist. Das Kontaktteil 32 ist von einem koaxialen Kontaktteil 34 in Form eines Steckbuchsenteils umgeben, welches mit der Kontaktfeder 16 verbunden ist. Die Kontaktteile 32 und 34 sind komplementär zu einem Koaxial-Anschlußstecker 36. Dessen radial innerer Anschluß ist von einer zylindrischen Hülse 38 aus Isoliermaterial umgeben, die eine umlaufende Nut 40 aufweist. Beim Aufstecken des Anschlußsteckers 36 greift das vordere Ende der Hülse 38 unter das umgebogene Ende der Federlamelle 16a und hebt diese von dem Kontaktteil 32 ab. Die Federlamelle 16a bildet, solange der Anschlußstecker 36 nicht aufgesteckt ist, einen Kurzschluß zwischen den Steckkupplungselementen 24 des elektrischen Zünders 26 des Gasgenerators 22, wenn der mechanische Kontaktgeber auf den Gasgenerator aufgeschoben ist. Durch diesen Kurzschluß wird das Aufbauen elektrostatischer Ladungen verhindert, die zu einer unbeabsichtigten Auslösung des elektrischen Zünders führen könnten. Erst durch das Aufstecken des Anschlußsteckers 36 wird der elektrische Zünder 26 entsichert. Die Federlamelle 16a greift dann in die umlaufende Rille 40 der Hülse 30, um den Anschlußstecker 36 am Kontaktgebergehäuse zu sichern. Dieses bildet, wie in Fig. 5 zu erkennen ist, insgesamt einen Zwischenstecker zwischen Anschlußstecker 36 und Gasgenerator 22. Der gesamte Kontaktgeber kann daher leicht in vorhandene Konstruktionen integriert werden und eignet sich auch zur fakultativen Ausstattung eines Rückhaltesystems, das ohne Änderung der Steckverbindungen an eine zentrale fahrzeugsensitive Steuereinheit angeschlossen werden kann.

## Patentansprüche

1. Fahrzeugsensitiver mechanischer Kontaktgeber zur Auslösung eines Rückhaltesystems in Fahrzeugen, mit einem zur fahrzeugfesten Anbringung bestimmten Gehäuse (10) und einem darin beweglich aufgenommenen Massekörper (12), der mit einem elektrischen Kontaktpaar zusammenwirkt, wobei an dem Massekörper (12) ein erstes, federbelastetes Kontaktelement (14), das in einem ersten vorbestimmten Abstand (s) von einem mit dem ersten Kontaktelement (14) als Kontaktpaar zusammenwirkenden zweiten Kontaktelement (16) angeordnet ist, in Anlage ist und den Massekörper (12) mit vorbestimmter Kraft in eine Ruhestellung von dem zweiten Kontaktelement (16) fort beaufschlagt, und wobei das zweite Kontaktelement (16) an seinem freien Ende von der Innenwand des Gehäuses (10) einen zweiten vorbestimmten Abstand (d) aufweist und durch den Massekörper (12) über das dazwischen angeordnete erste Kontaktelement (14) in Richtung gegen die benachbarte Innenwand des Gehäuses auslenkbar ist, dadurch gekennzeichnet, daß der erste und der zweite vorbestimmte Abstand (s bzw. d) jeweils einen Wert in der Größenordnung von 1 bis 2 mm aufweisen.

2. Kontaktgeber nach Anspruch 1, dadurch gekennzeichnet, daß der Massekörper (12) als Massekugel ausgebildet ist und der erste und der zweite Abstand (s bzw. d) jeweils nur einem geringen Bruchteil des Durchmessers der Massekugel entspricht.

3. Kontaktgeber nach Anspruch 1 oder 2, dadurch gekennzeichnet, daß mit der Oberfläche des Massekörpers (12) auf dessen von der Bodenwandung abgekehrten Seite eine unter vorbestimmter Vorspannung stehende federelastische Dämpfungseinrichtung (18) in Reibungseingriff steht.

## Claims

1. Vehicle-sensitive mechanical contactor for activating a restraining system in vehicles, comprising a housing (10) intended for vehicle-fixed mounting and a mass body (12) which is accommodated movably therein and cooperates with an electrical contact pair, wherein on the mass body (12) a first spring-loaded contact element (14) bears which is arranged at a first predetermined distance (s) from a second contact element (16) cooperating with the first contact element (14) as a contact pair and urges the mass body (12) with predetermined force into a rest position away from the second contact element (16), and wherein the second contact element (16) at its free end has a second predetermined distance (d) from the inner wall of the housing (10) and is deflectable in the direction towards the adjacent inner wall of the housing by the mass body (12) via the first contact spring (14) arranged therebetween, characterized in that the first and the second predetermined distance (s, d, respectively) each have a value in the order of 1 to 2 mm.

2. Contactor according to claim 1, characterized in that the mass body (12) is formed as a mass ball and the first and the second distance (s, d, respectively) each correspond to only a small fraction of the diameter of the mass ball.

3. Contactor according to claim 1 or claim 2, characterized in that a spring-resilient dampening device (18) subjected to a predetermined bias is in frictional engagement with the surface of the mass body (12) on its side facing away from the bottom wall.

## Revendications

1. Contacteur mécanique sensible aux mouvements d'un véhicule, qui sert à déclencher un système de retenue des passagers dans des véhicules, avec un boîtier (10) conçu pour être monté de façon solidaire sur le véhicule et avec un corps massif (12) qui est logé dedans de façon mobile et qui coopère avec une paire de contacts électriques, un premier élément de contact (14), comprimé par un ressort, étant en appui sur le corps massif (12), élément qui est disposé à une première distance prédéterminée (s) d'un second élément de contact (16), qui coopère avec le premier élément de contact (14) en formant une paire de contacts, et exerçant sur le corps massif (12) une force prédéterminée le maintenant dans une position de repos à l'écart du second élément de contact (16), et le second élément de contact (16) présentant à son extrémité libre à partir de la paroi intérieure du boîtier (10) une seconde distance prédéterminée (d) et pouvant être dévié par le corps massif (12) au moyen du premier élément de contact (14) disposé dans l'intervalle en direction de la paroi intérieure voisine du boîtier, caractérisé en ce que la première et la seconde distance prédéterminée (s ou d) présentent respectivement une valeur de l'ordre de grandeur de 1 à 2 mm.

2. Contacteur selon la revendication 1, caractérisé en ce que le corps massif (12) est constitué sous la forme d'une bille massive et la première et la seconde distance (s ou d) ne correspondent respectivement qu'à une petite fraction du diamètre de la bille massive.

3. Contacteur selon la revendication 1 ou 2, caractérisé en ce qu'un dispositif amortisseur (18) à déformation élastique, qui se trouve sous une précontrainte prédéterminée, est en prise par friction avec la surface du corps massif (12) sur son côté qui est situé à l'opposé de la paroi du fond.
